# EUROPÄISCHE PATENTSCHRIFT

(11) **EP 1 943 818 B1**
(45) Veröffentlichungstag und Bekanntmachung des Hinweises auf die Patenterteilung: **28.07.2010**
(21) Anmeldenummer: 06807244.6
(22) Anmeldetag: 13.10.2006
(51) Int. Cl.: H04M 1/60

(54) **FAHRERINFORMATIONSSYSTEM MIT FREISPRECHEINRICHTUNG FÜR FUNKGERÄTE, INSBESONDERE MOBILTELEFONE**
DRIVER INFORMATION SYSTEM COMPRISING A HANDS-FREE DEVICE FOR RADIO EQUIPMENT, PARTICULARLY MOBILE TELEPHONES
SYSTEME D'INFORMATION AU CONDUCTEUR COMPORTANT UN DISPOSITIF MAINS-LIBRES POUR DES APPAREILS RADIO, NOTAMMENT DES TELEPHONES MOBILES

(30) Priorität: 24.10.2005 DE 102005050790
(43) Veröffentlichungstag der Anmeldung: 16.07.2008
(73) Patentinhaber: ROBERT BOSCH GMBH, 70442 Stuttgart (DE)
(72) Erfinder: GERENDT, Siegfried, 31141 Hildesheim (DE); SOROKIN, Andrej, 38302 Wolfenbuettel (DE)
(86) Internationale Anmeldenummer: PCT/EP2006/067380
(87) Internationale Veröffentlichungsnummer: WO 2007/048715

(56) Entgegenhaltungen:
- EP-A- 1 473 913
- EP-A2- 0 901 267
- EP-A2- 1 052 834
- EP-A2- 1 188 617
- US-A1- 2003 020 603
- US-B1- 6 701 161

## Beschreibung

### Stand der Technik

Die Erfindung geht von einem Verfahren nach der Gattung des unabhängigen Patentanspruchs aus.

Aus Sicherheitsgründen ist es vom Gesetzgeber verboten worden, dass ein Fahrzeugführer während der Fahrt ein Telefongespräch mittels eines Mobiltelefons führt und dieses dabei in der Hand hält. Um einem Fahrzeugführer dennoch ein Telefonieren während der Fahrt zu ermöglichen, sind Freisprecheinrichtungen eingeführt worden, die ein Sprachsignal des Fahrzeugführers mittels eines Mikrofons aufnehmen und drahtlos, beispielsweise über eine Funkverbindung etwa nach dem Bluetooth-Standard oder drahtgebunden an das Telefon übertragen. Das Freisprechmikrofon kann Bestandteil eines so genannten Head-Set oder fest im Fahrzeug installiert sein. Ein Lautsprecher zur Wiedergabe von Sprachsignalen eines Gesprächsteilnehmers kann entsprechend im Head-Set angeordnet oder im Fahrzeug installiert sein.

In der Bedienungsanleitung bzw. der Bedienungs- und Einbauanteitung des Gerätes Blaupunkt Typ Antares T60, beide zugänglich über http://www.blaupunkt-shop.de/, ist ein Autoradiogerät beschrieben, das ein Mobilfunk-Telefon-Modul und eine Freisprecheinrichtung zum Telefonieren aufweist. Die Freisprecheinrichtung umfasst ein Mikrofon, das im Innenraum, vorzugsweise im oder in der Umgebung des Gesichtsfeldes des Fahrzeugführers, beispielsweise auf dem Armaturenbrett oder wie in der Einbauanleitung gezeigt im Bereich des oberen Frontscheibenrandes am Dachhimmel, anordenbar ist. Sprachsignale eines Telefon-Gesprächspartners des Fahrzeugführers werden über an das Gerät angeschlossene Lautsprecher, die auch der Wiedergabe von Audiosignalen aus empfangenen Rundfunkprogrammen oder anderen Audioquellen dienen, wiedergegeben.

In der DE 196 40 140 C2 ist ferner ein Autoradiogerät beschrieben, in dessen abnehmbarer Frontkappe, auch als Release Panel bezeichnet, ein Mikrofon angeordnet ist. Dieses Mikrofon dient der Eingabe von Sprachsignalen, die als Diktat in einem Speicher des Geräts aufgezeichnet werden können.

Aus der EP 0 319 777 BI sind ferner eine Vorrichtung und ein Verfahren zur selbsttätigen störgeräuschabhängigen Lautstärkesteuerung in einem Autoradio bekannt, bei dem ein von Lautsprechern im Fahrgastraum wiedergegebenes Nutzsignal und Störgeräusche im Fahrgastinnenraum gemeinsam als Summensignal von einem Mikrofon aufgenommen werden und aus dem Summensignal durch Korrelation mit dem Nutzsignal das Störgeräusch zur Bildung eines Stellsignals für die Lautstärkesteuerung isoliert wird.

In der EP 1 052 834 A2 ist ein Kraftfahrzeugkommunikationssystem offenbart, bei dem eine Freisprecheinrichtung für ein Mobiltelefon in ein Audio- oder Informationssystem integriert ist. Die Gesprächs- und/oder Datenübertragung zwischen dem Mobiltelefon und der Freisprecheinrichtung erfolgt über eine Kurzstrecken-Funkverbindung.

Die US 2003/0020603 A1 offenbart ein in einen Rückspiegel integriertes Verarbeitungssystem für Tonsignale, das in einem Fahrzeug mit einem Audiosystem integrierbar ist.

### Vorteile der Erfindung

Die Erfindung mit den Merkmalen der unabhängigen Patentansprüche hat den Vorteil, dass eine Freisprecheinrichtung für ein Funkgerät, insbesondere für eine Mobiltelefon, ohne zusätzliche Hardware im Fahrzeug sowie den mit deren Einbau verbundenen

Installationsaufwand realisierbar ist. Dazu ist erfindungsgemäß vorgesehen, dass bei einem Fahrerinformationssystem zum Einbau und Betrieb in ein/em Fahrzeug mit einer Frontkappe und einem darin angeordneten Mikrofon eine Kommunikationsschnittstelle vorgesehen ist, die dazu ausgelegt ist, über das Mikrofon aufgenommene Sprachsignale an das Funkgerät, insbesondere Mobiltelefon, zu übertragen.

Vorteilhaft ist die Kommunikationsschnittstelle zur Übertragung von Sprachsignalen eines Funk-Gesprächsteilnehmers vom Funkgerät an das Fahrerinformationssystem bidirektional ausgebildet. Damit können Sprachsignale eines Gesprächsteilnehmers über einen Lautsprecher des Fahrerinformationssystems, im Falle eines Autoradios über mindestens einen der daran angeschlossenen Lautsprecher, im Falle eines

Fahrzeugnavigationssystems über einen Lautsprecher zur Ausgabe von Fahrrichtungshinweisen, wiedergegeben werden.

Vorteilhaft ist , dass das Mikrofon zur Ausrichtung auf einen Fahrzeuginsassen verschwenkbar in der Frontkappe gelagert ist.

Vorteilhaft sind in der Frontkappe mindestens zwei Mikrofone angeordnet. Besonders vorteilhaft sind die Mikrofone dabei voneinander beabstandet in der Frontkappe angeordnet, beispielsweise in voneinander entfernten Endabschnitten der Frontkappe. Dies ermöglicht die Ausbildung einer Richtcharakteristik mit Ausrichtung auf den Fahrzeugführer bzw. einen anderen Fahrzeuginsassen als fahrzeugseitigem Gesprächsteilnehmer.

Vorteilhaft weist das Fahrerinformationssystem eine Signalverarbeitungseinrichtung auf, die dazu ausgebildet ist, die Mikrofonsignale zur Ausbildung einer Richtcharakteristik eines durch die Einzel-Mikrofone gebildeten Richtmikrofons zu verarbeiten.

Vorteilhaft kann die oder eine Signalverarbeitungseinrichtung dazu ausgebildet sein, die Mikrofonsignale zur Isolierung der aufgenommenen Sprachsignale aus den durch das oder die Mikrofon/e aufgenommenen Geräuschen zu verarbeiten. Insbesondere kommen als Geräusche dabei Fahrgeräusche, die aus Geräuschen des Antriebsstrangs, insbesondere einer Brennkraftmaschine, aus Abrollgeräuschen der Reifen und/oder aus Fahrtwindgeräuschen resultieren, in Betracht. Ferner kommen auch beispielsweise Gespräche weiterer Fahrzeuginsassen untereinander, die an dem Telefonat nicht beteiligt sind oder eine Musik- oder sonstige Audiosignatwiedergabe im Fahrzeug in Betracht. Schließlich dient die Signalverarbeitungseinrichtung vorteilhaft auch der Unterbindung einer Rückkopplung der Wiedergabe von Sprachsignalen des jenseitigen Gesprächsteilnehmers in das Sprachsignal des fahrzeugseitigen Gesprächsteilnehmers.

Vorteilhaft ist die Kommunikationsschnittstelle als Funkschnittstelle, insbesondere Nahbereichs-Funkschnittstelle, vorzugsweise nach einem etablierten Standard wie Bluetooth, W-LAN oder dergleichen, ausgebildet. Damit sind herkömmliche Funkgeräte bzw. Mobiltelefone, die heute weitestgehend mit entsprechenden kompatiblen Schnittstellen ausgestatten sind, mit dem Fahrerinformationssystem zur Realisierung der Freisprechfunktion verbindbar. Kabelverbindungen und damit die optisch oft störend Verlegung der Kabel sind damit entbehrlich.

Verfügt das Fahrerinformationssystem über eine selbsttätige Lautstärkesteuerung mit Mikrofon und Signalverarbeitungseinrichtung, zur Isolierung des Störgeräusches aus dem mit dem Mikrofon aufgenommenen Gemisch aus Nutz- bzw. Audiosignals und Störgeräusch, vergleichbar oder ähnlich der Vorrichtung gemäß EP 0 319 777 B1, kann diese Signalverarbeitungseinrichtung in vorteilhafter Weise auch zur Ausbildung der Richtcharakteristik des Mikrofon-Arrays aus den mindestens beiden Frontkappenmikrofonen und/oder zur Eliminierung von Störgeräuschen aus den Mikrofonsignalen genutzt werden. Dies gilt um so mehr, wenn die selbstätige Lautstärkesteuerung für die Dauer eines Telefonats, während der eine Audiosignalwiedergabe vorzugsweise stumm- oder leise geschaltet wird, ausgesetzt wird und damit die volle Rechenkapazität der Signalverarbeitungseinrichtung für die genannten Funktionen im Zusammenhang mit dem Telefonat zur Verfügung steht.

### Zeichnungen

Ausführungsbeispiele der Erfindung sind in den Figuren dargestellt und werden nachfolgend näher erläutert.

Es zeigen
Figur 1 eine Frontkappe eines erfindungsgemäßen Fahrerinformationssystems in der Draufsicht, in der es sich auch dem Fahrzeugführer oder anderen Fahrzeuginsassen präsentiert,
Figur 2 eine Signalverarbeitungseinrichtung zur Verarbeitung der mit den in der Frontkappe angeordneten Mikrofonen aufgenommenen Sprachsignale,
Figur 3 ein detailliertes Blockschaltbild der Signalverarbeitungseinrichtung gemäß einer bevorzugten Ausführungsform der Erfindung.

### Beschreibung der Ausführungsbeispiele

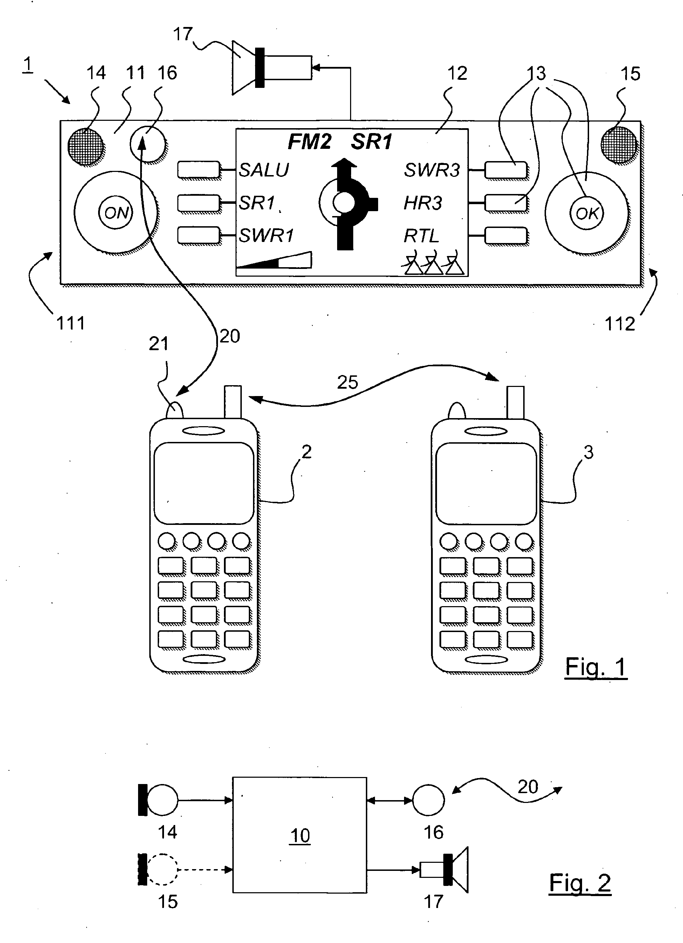

Figur 1 zeigt die Frontkappe 11 eines erfindungsgemäßen Fahrerinformationssystems 1 in der Draufsicht, wie sie sich dem Fahrzeugführer und/oder sonstigen Fahrzeuginsassen bei in die Mittelkonsole des Fahrzeugs eingebauten Zustand präsentiert. Im vorliegenden Fall handelt es sich bei dem Fahrerinformationssystem 1 um ein integriertes Autoradio- und Fahrzeugnavigationsgerät mit den an sich bekannten Autoradio- und Navigationssystem-Funktionalitäten. Das Fahrerinformationssystem 1 weist auf der Frontkappe 11 Bedienelemente 13, wie Drucktasten, Drehschalter und dergleichen und ein Display 12 zur Anzeige eines Betriebszustandes und anderer Informationen, hier beispielsweise von Zielführungsinformationen zur Führung entlang einer zuvor berechneten Fahrroute, auf.

Erfindungsgemäß weist die Frontkappe 11 weiterhin mindestens ein, im vorliegenden Fall zwei Mikrofone 14 und 15 auf. Diese sind bevorzugt voneinander beabstandet in der Frontkappe 11 angeordnet, im vorliegenden Fall in den Endabschnitten der Frontkappe 11 im Bereich deren einander gegenüberliegenden Seitenkanten 111 und 112. Erfindungsgemäß weist die Frontkappe 11 weiterhin eine Schnittstelle 16 auf, die im vorliegenden Fall bevorzugt als Funkschnittstelle nach einem etablierten Standard, vorzugsweise Bluetooth, W-LAN oder dergleichen ausgebildet ist. Gemäß der hier beschriebenen bevorzugten Ausführungsform ist die Schnittstelle 16 bidirektional, also sowohl zum Senden, als auch zum Empfangen von entsprechenden Funksignalen ausgebildet. Bei einer einfacheren Ausführungsform der Erfindung kann es sich davon abweichend auch um eine unidirektionale Schnittstelle 16 zum lediglich Senden von Funksignalen handeln.

An das Fahrerinformationssystem 1 ist mindestens ein Lautsprecher 17 angeschlossen. Dieser dient neben der Wiedergabe von beispielsweise in empfangenen Rundfunkprogrammen enthaltenen Audiosignalen beispielsweise auch der Ausgabe akustischer Fahmchtungshinweise zur Führung des Fahrzeugführers entlang einer zuvor berechneten Fahrroute im Rahmen der Navigationsfunktion des Fahrerinformationssystems.

Das Fahrerinformationssystem ist über die Schnittstelle 16 mit einem entsprechend ausgebildeten Funkgerät 2, im vorliegenden Fall einem handelsüblichen Mobiltelefon das über eine kompatible zweite Funkschnittstelle 21 verfügt, verbindbar. Im vorliegenden Fall handelt es sich dabei beispielsweise um eine Bluetooth-Schbittstelle 21, die bei heutigen Mobiltelefonen verbreitet ist und auch schon zur Übertragung von Sprachsignalen 20 im Rahmen eines Telefonats von/an eine/r herkömmliche/n Freisprecheinrichtung eingerichtet ist. Das Mobiltelefon 2 ist in bekannter Weise zur Durchführung eines Telefongesprächs mit einem weiteren Mobiltelefon 3 über eine Mobiltelefonverbindung 25 verbindbar

Von dem jenseitigen Mobiltelefon 3 über die Mobilfunkverbindung 25 empfangene Sprachsignale werden vom ersten Mobiltelefon 2, welches im Bereich der Reichweite der Schnittstelle 16 des Fahrerinformationssystems 1, vorzugsweise also im Fahrgastraum des Kraftfahrzeugs, betrieben wird, über die zweite Funkschnittstelle 21 des Mobiltelefons 2 und die Funkverbindung 20 an die Funkschnittstelle 16 des Fahrerinformationssystems 1 gesendet. Die empfangenen Sprachsignale werden im Fahrerinformationssystem dekodiert und in Sprache umgesetzt und sodann über den mindestens einen oder mindestens einen der mehreren angeschlossenen Lautsprecher 17 ausgegeben. Bevorzugt werden die Telefon-Sprachsignale über einen im Bereich des Fahrzeugführers angeordneten Lautsprecher ausgegeben. Alternativ kann auch vorgesehen werden, dass im Falle mehrerer Lautsprecher 17 der Lautsprecher für die Telefonsignalwiedergabe frei wählbar ist. Dies ist beispielsweise von Interesse, wenn der Beifahrer oder ein sonstiger Fahrzeuginsasse ein Telefonat führen möchte.

Auf dem umgekehrten Wege werden Sprachsignale des fahrzeugseitigen Gesprächsteilnehmers vom Mikrofon 14 oder 14 und 15 aufgenommen, im Fahrerinformationssystem verarbeitet und über die Funkschnittstelle 16 an die zweite Funkschnittstelle 21 des im Fahrzeug betriebenen Mobiltelefons oder Funkgeräts 2 übertragen und von diesem sodann über die Mobilfunkverbindung 25 an das jenseitige Mobiltelefon 3 weiter geleitet.

Das beschriebene Fahrerinformationssystem 1 dient somit als Freisprecheinrichtung für ein in einem Kraftfahrzeug betriebenes Mobiltelefon oder allgemeiner Funkgerät, wobei die Telefon-Sprachsignale von und zum Mobiltelefon oder Funkgerät über die Funkschnittstelle 16 des Fahrerinformationssystems 1 und eine entsprechend kompatible zweite Funkschnittstelle 21 des Mobiltelefons 2 übertragen werden.

Figur 2 zeigt ein grobes Blockschaltbild der Signalverarbeitung des Fahrerinformationssystems 1, soweit diese dessen Freisprech-Funktion betrifft. Das oder die Mikrofone 14 oder 14 und 15 sind mit einer Signalverarbeitungseinrichtung 10 verbunden, die nachfolgend noch näher beschrieben wird. Die Signalverarbeitungseinrichtung 10 führt im Falle zweier Mikrofone 14 und 15 eine Vorverarbeitung der damit aufgenommenen Sprachsignale durch und kodiert diese sodann in das Funkformat der Funkschnittstelle 16, über die das Sprachsignal sodann gesendet wird (20). Weiterhin dekodiert die Signalverarbeitungseinrichtung 10 über die Funkschnittstelle 16 vom Mobiltelefon 2 empfangene kodierte, beispielsweise Bluetooth-, Sprachsignale und leitet diese an den Lautsprecher 17 zur Wiedergabe der Sprachsignale weiter.

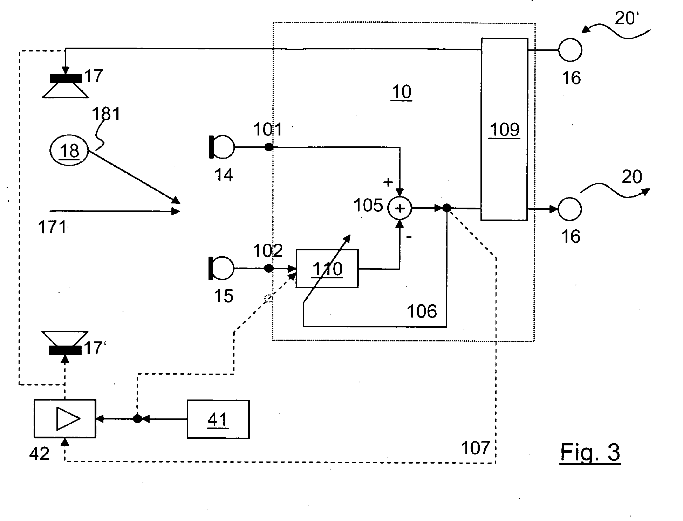

Figur 3 zeigt ein Blockschaltbild des erfindungsgemäßen Fahrerinformationssystems 1. Bei dem in der Figur 3 dargestellten Ausführungsbeispiel der Erfindung wird in vorteilhafter Weise die Signalverarbeitungseinrichtung, die zumindest teilweise schon für eine automatische störgeräuschabhängige Lautstärkesteuerung vorhanden ist, auch für Vorverarbeitung der mit hier zwei Mikrofonen 14 und 15 aufgenommenen Sprachsignale genutzt.

Die skizzierte automatische Lautstärkesteuerung ist beispielsweise aus der einganges erwähnten EP 0 319 777 B1 bekannt, auf die zur Offenbarung deren Funktionsweise hiermit ausdrücklich Bezug genommen wird. Die Signale einer Audiosignalquelle 41, beispielsweise das Radioprogramm eines Rundfunksenders oder Audiosignale von einem Speichermedium wie Magnetbandkassette, Compact Disc, USB-Stick oder dergleichen werden über einen steuerbaren Verstärker den Lautsprechern 17 und 17', die in der Fahrgastzelle verteilt angeordnet sind, zugeführt und von diesen wiedergegeben. Das im Innenraum herrschende Geräusch einschließlich des durch die Lautsprecher 17 wiedergegebenen Audiosignals wird von einem Mikrofon 14 aufgenommen und einem ersten Eingang 101 der Signalverarbeitungseinrichtung 10 zugeführt. Dort wird das aufgenommenen Summensignal aus Nutzsignal, nämlich wiedergegebenem Audiosignal, und Störgeräuschsignal, etwas beinhaltend Abrollgeräusche der Reifen, Geräusche vom Antriebsstrang des Fahrzeugs, Windgeräusche und dergleichen, in an sich bekannter Weise digitalisiert und einer Summierschaltung 105 zugeführt. Weiter wird das Ausgangssignal der Audiosignalquelle 15 einem zweiten Eingang 102 der Signalverarbeitungseinrichtung 10 zugeführt, dort ebenfalls in bekannter Weise digitalisiert und über ein steuerbares Filter 110 einem zweiten Eingang der Summierschaltung 105 zugeführt. In der Summierschaltung 105 wird das Ausgangssignal des Filters 110 von dem Mikrofonsignal subtrahiert. Zweck dieser Subtraktion ist es, das Nutzsignal aus dem Mikrofonsignal herauszufiltern und somit ein Störgeräuschsignal frei von Einflüssen des Nutzsignals zu erhalten.

Da das über die Lautsprecher 17 und 17' ausgegebene Audiosignal bereits durch die Übertragungsstrecke vom Lautsprecher zum Mikrofon 14 verfälscht worden ist - die Akustik des Fahrzeuginnenraums bewirkt beispielsweise eine frequenzabhängige Verstärkung und Abschwächung des Audiosignals - wird das von der Audiosignalquelle stammende Referenzsignal über das Filter 110 geleitet, welches Filter die Übertragungsstrecke des Mikrofonsignals nachbilden soll. Hierzu ist das Filter 110 als veränderliches, vorzugsweise adaptives Filter ausgebildet, wobei seine Filterkoeffizienten automatisch nach einem Gradientenverfahren, etwa dem LMS- (least mean squares) Algorithmus aus dem am Ausgang der Summierschaltung 105 anstehenden Differenzsignal 106 gebildet werden.

Das am Ausgang der Summierschaltung 105 anstehende Differenzsignal wird, nach entsprechender Aufbereitung, d.h. insbesondere Filterung im Sinne einer Mittelwertbildung der Signalamplituden, als Steuersignal 107 zur Lautstärkesteuerung dem steuerbaren Verstärker 42 zugeführt. Ein hoher Störgeräuschpegel bewirkt damit eine Lautstärkeerhöhung bzw. die Einstellung einer hohen Widergabelautstärke, ein geringer Störgeräuschpegel entsprechend eine geringere Wiedergabelautstärke für die Audiosignale.

Erfindungsgemäß wird diese in Autoradiogeräten und allgemein Fahrerinformationssystemen bereits vorhandene Signalverarbeitungseinrichtung auch zur Vorverarbeitung der mit hier zwei, theoretisch auch mehr, Mikrofonen 14 und 15 aufgenommenen Sprachsignale genutzt. Dazu wird anstelle des Audiosignals von der Quelle 41 nunmehr das von dem zweiten Mikrofon 15 aufgenommene Signal, welches das Telefon-Sprachsignal und weitere Geräusche in der Fahrgastzelle des Fahrzeugs umfasst, dem zweiten Eingang 102 der Signalverarbeitungseinrichtung 10 und damit dem digitale Filter 110 zugeführt.

Die Koeffizienten des digitalen Filters 110 werden dabei so eingestellt, dass sich eine Richtcharakteristik des aus den beiden Mikrofonen 14 und 15 gebildeten Mikrofon-Array in Richtung auf den Fahrzeugführer 18 ergibt. Wesentlich ist hierbei, dass der Fahrzeugführer, oder alternativ ein anderer Fahrzeuginsasse, der telefoniert, im Regelfall seitlich versetzt zur Frontkappe 11 des Fahrerinformationssystems und damit zu den darin angeordneten Mikrofonen 14 und 15 sitzt. Das Sprachsignal 181 des Gesprächsteilnehmers trifft somit schräg zur Fahrrichtung auf die Frontkappe 11, weist also eine Laufzeitdifferenz zu den beiden Mikrofonen 14 und 15 auf. Störgeräusche hingegen sind oftmals diffus im Fahrzeuginnenraum verteilt und treffen in grober Näherung längs der Fahrrichtung, also ohne Laufzeitdifferenz auf die beiden Mikrofone. Die durch das Filter 110 in Verbindung mit der Subtraktion 105 bewirkte Richtcharakteristik verbessert somit den Signal-Störabstand des über die Mikrofone aufgenommenen Sprachsignals.

Darüber hinaus ist auch eine adaptive Filterung der aufgenommenen Sprachsignale möglich. Es ist damit auch möglich, eine Rückkopplung der von dem Lautsprecher 17 wiedergegebenen Sprachsignale des jenseitigen Gesprächsteilnehmers in die Sprachsignale des im Fahrzeug befindlichen Gesprächsteilnehmer, die mit den Mikrofonen 14 und 15 aufgenommen werden, zu verhindern. Ansätze hier- wie dazu sind beispielsweise in Bernard Widrow, Samuel D. Stearns: "Adaptive Signal Processing", 1985, Prentice Hall, Upper Saddle River, New Jersey, US hinlänglich beschrieben und bedürfen daher keiner näheren Erläuterung.

Das Differenzsignal als idealerweise reines Telefon-Sprachsignal wird einer Kodier-/Dekodierschaltung 109 zugeführt und dort in ein hier Bluetooth-Sendesignal, alternativ ein anderes Funksignal, umgesetzt und sodann über die Funkschnittstelle abgestrahlt (20).

Ein über die Funkschnittstelle 16 empfangenes Bluetooth-Funksignal des Mobiltelefons 2 wird durch die Kodier-/Dekodierschaltung 109 in ein akustisches Signal umgesetzt, verstärkt und sodann über den Lautsprecher 17 als Sprachsignal des jenseitigen Gesprächsteilnehmers ausgegeben.

## Patentansprüche

1. Fahrerinformationssystem (1) zum Einbau und Betrieb in ein/em Fahrzeug, mit einer Frontkappe (11) und wenigstens zwei darin angeordneten Mikrofonen (14, 15) und einer Kommunikationsschnittstelle (16), die dazu ausgelegt ist, über die wenigstens zwei Mikrofone (14, 15) aufgenommene Sprachsignale (181) an ein Funkgerät (2), insbesondere Mobiltelefon, zu übertragen, **gekennzeichnet durch** eine Signalverarbeitungseinrichtung (10), die dazu ausgebildet ist, Mikrofonsignale zur Isolierung der aufgenommenen Sprachsignale aus den **durch** die wenigstens zwei Mikrofone (14, 15) aufgenommenen Geräuschen zu verarbeiten und eine automatische störgeräuschabhängige Lautstärkesteuerung unter Verwendung eines adaptiven Filters (110) vorzunehmen.

2. Fahrerinformationssystem nach Anspruch 1, **dadurch gekennzeichnet, dass** die Kommunikationsschnittstelle (16) zur Übertragung von Sprachsignalen eines Funk-Gesprächsteilnehmers vom Funkgerät (2) an das Fahrerinformationssystem (1) zwecks Wiedergabe über einen Lautsprecher (17) des Fahrerinformationssystems (1) bidirektional ausgebildet ist.

3. Fahrerinformationssystem nach einem der vorhergehenden Ansprüche, **dadurch gekennzeichnet, dass** wenigstens ein Mikrofon (14) zur Ausrichtung auf einen Fahrzeuginsassen (18) verschwenkbar in der Frontkappe (11) gelagert ist.

4. Fahrerinformationssystem nach einem der vorhergehenden Ansprüche, **dadurch gekennzeichnet, dass** in der Frontkappe (11) mindestens zwei Mikrofone (14, 15), vorzugsweise voneinander beabstandet im Bereich voneinander entfernter Endabschnitte der Frontkappe (11), angeordnet sind.

5. Fahrerinformationssystem nach Anspruch 4, **dadurch gekennzeichnet, dass** die Signalverarbeitungseinrichtung (10) dazu ausgebildet ist, die Mikrofonsignale zur Ausbildung einer Richtcharakteristik eines durch die Einzel- Mikrofone gebildeten Richtmikrofons zu verarbeiten.

6. Fahrerinformationssystem nach einem der vorhergehenden Ansprüche, **dadurch gekennzeichnet, dass** die Kommunikationsschnittstelle (16) als Funkschnittstelle, insbesondere Nahbereichs-Funkschnittstelle, vorzugsweise nach einem etablierten Standard wie Bluetooth, W-LAN oder dergleichen, ausgebildet ist.

## Claims

1. Driver information system (1) for installation and operation in a vehicle, having a front cap (11) and at least two microphones (14, 15) arranged therein and a communication interface (16) which is designed to transmit voice signals (181) recorded by means of the at least two microphones (14, 15) to a radio (2), particularly a mobile telephone, **characterized by** a signal processing device (10) which is designed to process microphone signals for the purpose of isolating the recorded voice signals from the sounds recorded by the at least two microphones (14, 15) and to perform automatic noise-dependent volume control using an adaptive filter (110).

2. Driver information system according to Claim 1, **characterized in that** the communication interface (16) is of bidirectional design for transmitting voice signals from a radio call subscriber from a radio (2) to the driver information system (1) for the purposes of reproduction via a loudspeaker (17) in the driver information system (1).

3. Driver information system according to one of the preceding claims, **characterized in that** at least one microphone (14) is mounted so as to be able to swivel in the front cap (11) for the purpose of orientation to a vehicle occupant (18).

4. Driver information system according to one of the preceding claims, **characterized in that** the front cap (11) contains at least two microphones (14, 15), preferably at a distance from one another in the region of end sections of the front cap (11) which are remote from one another.

5. Driver information system according to Claim 4, **characterized in that** the signal processing device (10) is designed to process the microphone signals for the purpose of producing a directional characteristic of a direction microphone formed by the individual microphones.

6. Driver information system according to one of the preceding claims, **characterized in that** the communication interface (16) is in the form of a radio interface, particularly a short-range radio interface, preferably based on an established standard such as Bluetooth, W-LAN or the like.

## Revendications

1. Système (1) d'information du conducteur destiné à être monté et utilisé dans un véhicule et présentant un clapet avant (11) dans lequel sont disposés au moins deux microphones (14, 15) et une interface de communication (16) conçue pour transmettre à un appareil radio (2) et en particulier un téléphone mobile des signaux vocaux (181) enregistrés par les deux ou plusieurs microphones (14, 15),
**caractérisé par**
un dispositif (10) de traitement de signaux conçu pour traiter les signaux des microphones pour isoler les signaux vocaux enregistrés des bruits enregistrés par les deux ou plusieurs microphones (14, 15) et entreprendre une commande automatique de l'intensité acoustique indépendamment du bruit, par recours à un filtre adaptatif (110).

2. Système d'information du conducteur selon la revendication 1, **caractérisé en ce que** l'interface de communication (16) est configurée pour transmettre bidirectionnellement des signaux vocaux d'un abonné de radiotéléphonie entre l'appareil radio (2) et le système (1) d'informations du conducteur pour qu'ils soient reproduits sur un haut-parleur (17) du système (1) d'informations du conducteur.

3. Système d'information du conducteur selon l'une des revendications précédentes, **caractérisé en ce que** le ou les microphones (14) sont montés de manière pivotante dans le clapet avant (11) pour être orientés vers un passager (18) du véhicule.

4. Système d'information du conducteur selon l'une des revendications précédentes, **caractérisé en ce qu'**au moins deux microphones (14, 15), de préférence placés à distance l'un de l'autre, sont disposés dans la zone de parties d'extrémité éloignées l'une de l'autre du clapet avant (11).

5. Système d'information du conducteur selon la revendication 4, **caractérisé en ce que** le dispositif (10) de traitement de signaux est conçu pour traiter des signaux du microphone en vue de former une caractéristique d'orientation d'un microphone directionnel formé par les différents microphones.

6. Système d'information du conducteur selon l'une des revendications précédentes, **caractérisé en ce que** l'interface de communication (16) est configurée comme interface radio, en particulier comme interface radio de proximité, de préférence selon une norme reconnue, par exemple bluetooth, W-LAN ou similaires.
